(19) Europäisches Patentamt
European Patent Office
Office européen des brevets

(11) **EP 3 185 176 A1**

(12) **EUROPEAN PATENT APPLICATION**

(43) Date of publication:
**28.06.2017 Bulletin 2017/26**

(51) Int Cl.:
*G06K 9/00* (2006.01)   *G06K 9/62* (2006.01)

(21) Application number: **16204815.1**

(22) Date of filing: **16.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.12.2015 EP 15307080**

(71) Applicant: **THOMSON Licensing
92130 Issy-les-Moulineaux (FR)**

(72) Inventors:
• **LE CLERC, Francois**
  **35576 Cesson Sévigné Cedex (FR)**
• **BURGOS, Xavier**
  **35576 Cesson Sévigné Cedex (FR)**
• **BORDEI, Cristina**
  **35576 Cesson Sévigné Cedex (FR)**

(74) Representative: **Merlet, Hugues
  TECHNICOLOR
  1-5, rue Jeanne d'Arc
  92130 Issy-les-Moulineaux (FR)**

(54) **METHOD AND DEVICE FOR SYNTHESIZING AN IMAGE OF A FACE PARTIALLY OCCLUDED**

(57)     A method and device for synthesizing a first face (111) in a first image (11), by determining a first occluded part of the first face that is occluded by an occluding object (112); determining a first visible part of the first face from the first occluded part; calculating first attributes representative of the first visible part; obtaining first parameters representative of an appearance of the first face by applying a regressor to the first attributes, the regressor modelling a correlation between second attributes representative of second visible parts of a plurality of second faces in second images and second parameters representative of an appearance model of the plurality of second faces; and synthesizing the first face using the first parameters.

**Fig 1**

**Description**

**1. Technical field**

The present disclosure relates to the domain of image processing, especially to the synthesis of an image representative of a face. The present disclosure also relates to the reconstruction of an image of a face, for example the reconstruction of the image of a face at least partially occluded by an occluding object, e.g. a head-mounted display, for example when used for immersive experiences in gaming, virtual reality, movie watching or video conferences.

**2. Background**

Head-mounted displays (HMD) have undergone major design improvements in the last years. They are now lighter and cheaper and have higher screen resolution and lower latency, which makes them much more comfortable to use. As a result, HMD are now at a point where they will slowly start to affect the way we consume digital content in our everyday lives. The possibility of adapting the content being watched to the user's head movements provides a perfect framework for immersive experiences in gaming, virtual reality, movie watching or video conferences.

One of the issues of wearing an HMD to this day is that they are very invasive, and hide the wearer's face. In some cases, this is not an issue since the wearer of the HMD is isolated in a purely individualistic experience. However, the recent success of HMD's suggests that they will soon play a part in social interactions. One example can be collaborative 3D immersive games where two individuals play together and can still talk and see each other's faces. Another example is video-conferencing, where switching from traditional screens to HMD can bring the possibility of viewing the other person (and his surroundings) in 3D as if he was really there. In both cases, not seeing the other person's face damages the quality of the social interaction as it hides part of the non-verbal communication channels, and reduces the quality of the user experience.

**3. Summary**

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of generating a first face in a first image, a first occluded part of the first face being occluded by an occluding object in the first image, the method comprising:

- obtaining first attributes representative of a first visible part of the first face;
- obtaining first parameters representative of an appearance of the first face by applying a regressor to the first attributes, the regressor modelling a correlation between second attributes representative of second visible parts of a plurality of second faces in second images and second parameters representative of an appearance model of the plurality of second faces;
- generating the first face from the first parameters.

According to a particular characteristic, each second face is represented non-occluded in one corresponding second image of said second images, a set of determined landmarks being associated with each second face in the corresponding second image, said appearance model and said second parameters representative of the appearance model being obtained by a statistical analysis of landmark location information associated with said determined landmarks and of texture information associated with an area delimited by a convex hull of said determined landmarks in the second images.

According to a specific characteristic, the method further comprises obtaining said regressor, by:

- determining a second occluded part of each second face of at least a part of said plurality of second faces from a shape information associated with the occluding object;
- determining the second visible parts from the second occluded parts;
- calculating the second attributes from the second visible parts; and
- obtaining the regressor from the second attributes and the second parameters.

According to another characteristic, the appearance model is an Active Appearance Model.

According to a particular characteristic, the occluding object is a Head-Mounted Display.

According to a specific characteristic, the generating comprises retrieving a third image of the first face having third parameters closest to the first parameters, the first face comprising no occluded part in the third image.

The present disclosure also relates to a device for generating a first face in a first image, the device comprising at least one processor configured to implement the steps of the abovementioned method of synthesizing a first face in a first image.

The present disclosure also relates to a computer program product comprising instructions of program code for executing, by at least one processor, the abovementioned method of synthesizing a first face in a first image, when the program is executed on a computer.

The present disclosure also relates to a (non-transitory) processor readable medium having stored therein instructions for causing a processor to perform at least the abovementioned method of synthesizing a first face in a first image.

## 4. List of figures

The present disclosure will be better understood, and other specific features and advantages will emerge upon reading the following description, the description making reference to the annexed drawings wherein:

- figure 1 shows a device configured to synthesize an image of a first face, in accordance with an example of the present principles;
- figure 2 shows an image of a second face usable to configure an element of the device of figure 1, in accordance with an example of the present principles;
- figure 3 shows the image of figure 2 with the second face partially occluded, in accordance with an example of the present principles;
- figure 4 shows landmarks associated with the image of figure 2, in accordance with an example of the present principles;
- figure 5 shows a method of synthesizing the first face of figure 1, in accordance with an example of the present principles;
- figure 6 shows a method of obtaining parameters used to configure one or more elements of the device of figure 1, in accordance with an example of the present principles;
- figure 7 diagrammatically shows the structure of a communication terminal comprising the device of figure 1, in accordance with an example of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present principles will be described in reference to a particular embodiment of a method of and device for generating, e.g. synthesizing, a first face in a first image, by determining a first occluded part of the first face that is occluded by an occluding object, for example a Head-Mounted Display (HMD). One or more first visible part(s) of the first face is (are) determined by using an information representative of the first occluded part. First attributes representative of the first visible part are calculated. First parameters representative of an appearance of the first face are obtained by applying a regressor to the first attributes, the regressor modelling a correlation between second attributes representative of second visible parts of a plurality of second faces in second images and second parameters representative of an appearance model of the plurality of second faces. The first face is then synthesized without occluded part by using the first parameters.

Using a regressor to retrieve the first parameters representative of the appearance (e.g. shape and/or texture) of the first face enables to reconstruct the image of the face of a person in a way that is robust to (severe) occlusion(s) as well as to changes in head pose, facial expression and/or lighting conditions.

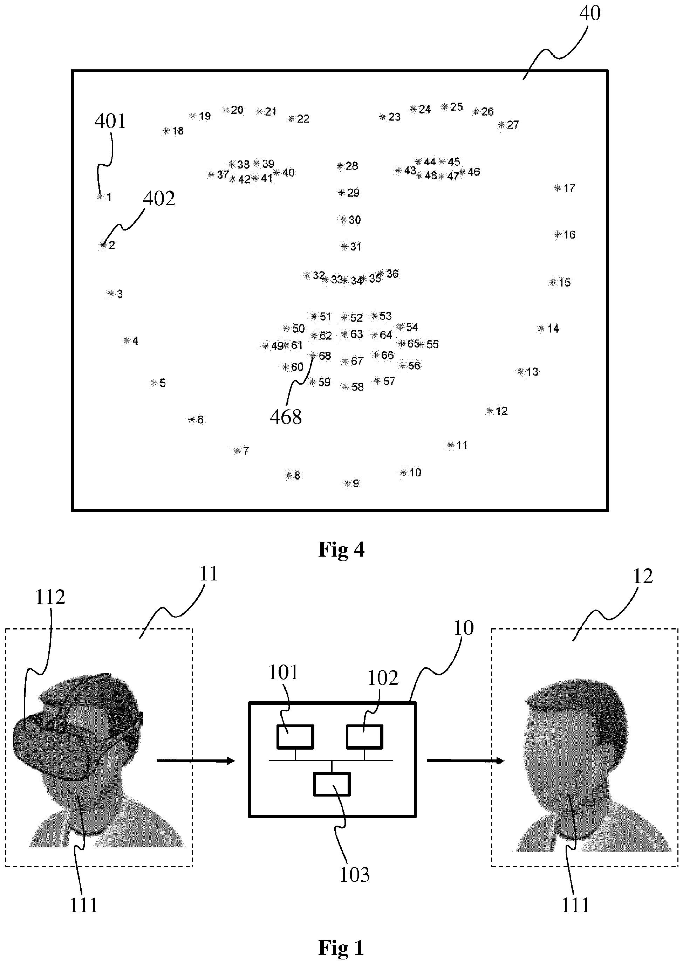

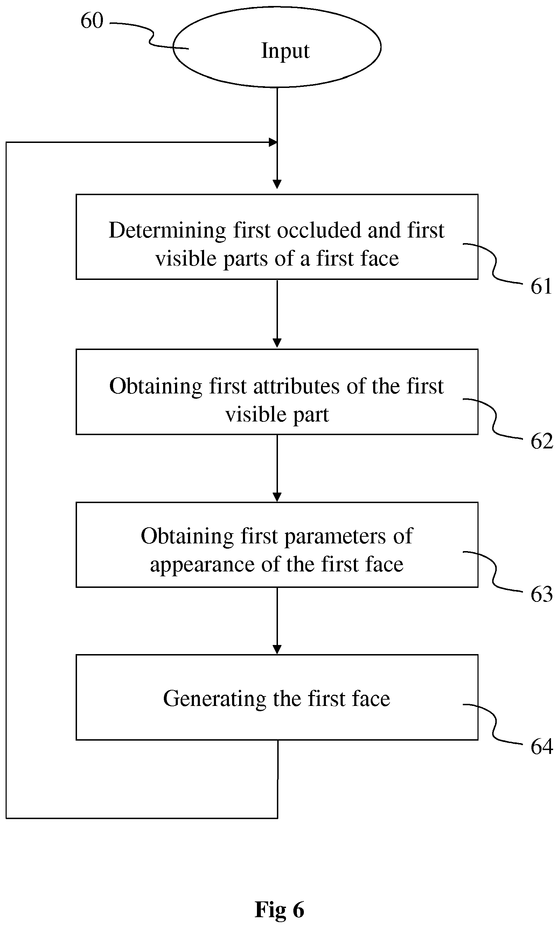

**Figure 1** shows a device 10 configured to implement a method of synthesizing a first face 111 represented in a first image 11, according to a particular and non-limiting embodiment of the present principles. An example embodiment of the method of synthesis will be described with more details hereinbelow, with regard to figure 6. The first face 111 is partially occluded by an occluding object 112 in the first image 11. The occluding object 112 is for example a HMD (Head-Mounted Display), a pair of glasses, a mask or any object that may be worn by a user. The device 10 processes the first image (or input image) 11 to generate an output image 12 representing the first face 111 but without any occlusion. The first face 111 is synthesized by the device by replacing the part of the first face occluded by the occluding object 112 with a synthesized part of the first face that enables to obtain a whole visible first face. Such a reconstruction enables to better recognize the first face, which may enhance the user experience during video-conference via HMD for example or enhance the possibility to recognize a person on a video (for example for security reason in video surveillance application). In addition, the reconstruction of the full face better conveys its expressions and emotions, which are known to be important non-verbal communication cues.

The first image 11 is for example a still image acquired with a digital still camera or an image from a sequence of images, i.e. a video, acquired with a camera. The first image may be stored on a storage device in connection with the device 10. The storage device may include one or more memories stored locally and/or remotely (e.g., cloud). The storage device may be connected to the device via wired connection (e.g., Ethernet, USB) or via wireless connection (e.g., Wi-Fi, Bluetooth).

The device 10 comprises the following elements that are linked together by a data and address bus (that may also transports a clock signal):

- one or more microprocessor 101, for example a CPU (or Central Processing Unit) and/or GPUs (or Graphical Processor Units) and/or DSP (or Digital Signal processor)

- a memory 102, for example a RAM (or Random Access Memory) and/or a ROM (or Read Only Memory) and/or,

- a receiver/transmitter interface 103 configured and adapted to receive and/or transmit, for example, data representative of one or more images, one or more appearance models and associated parameters, one or more regressors and associated parameters.

- a power source, not represented on figure 1.

The device 10 may also comprise one or more display devices to display images generated and calculated in the device, for example. According to a variant, a display device is external to the device 10 and is connected to the device 10 by a cable or wirelessly for transmitting the display signals. When switched-on, the microprocessor(s) 101 loads and executes the instructions of the program contained in the memory 102. The algorithms implementing the steps of the method(s) specific to the present principles and described hereinbefore are stored in the memory 102 associated with the device 10 implementing these steps. The device 10 corresponds for example to a computer, a tablet, a Smartphone, a games console, a laptop, a decoder or a set-top box.

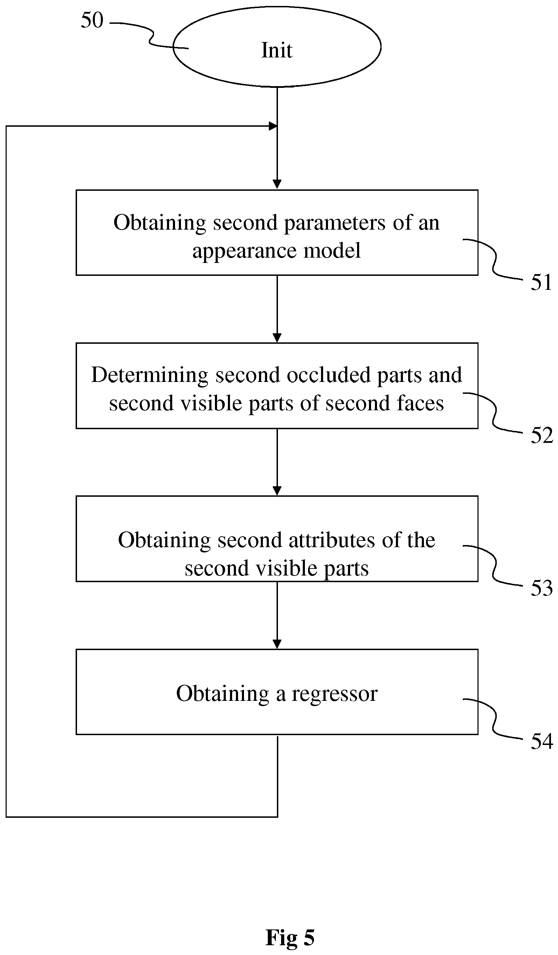

According to an aspect of the present principles, the device 10 is further configured and adapted to implement a method of learning an appearance model of the first face by using second images representing second faces. According to another aspect of the present principles, the device 10 is further configured and adapted to implement a method of learning a regression between attributes associated with visible part(s) of the second faces and parameters of the appearance model. An example embodiment of the method of learning the appearance model and the regression will be described with more details hereinbelow, with regard to figure 5.

According to a variant, the appearance model and associated parameters and the regression are obtained by the device 10 from a remote server and/or storage device, for example via a network such as the Internet, a list of different appearance models and/or regressions being for example stored on said server and/or storage device.

**Figure 5** shows a training method for learning an appearance model from a set of second images of second faces and for learning a regressor establishing a correlation between second attributes representative of second visible parts of the second faces and second parameters representative of said appearance model, according to a particular and non-limiting embodiment of the present principles. The training method is for example implemented in the device 10.

During an initialisation step 50, the different parameters of the device 10 are updated. In particular, the parameters of the appearance model and the parameters of the regressor are initialised in some way.

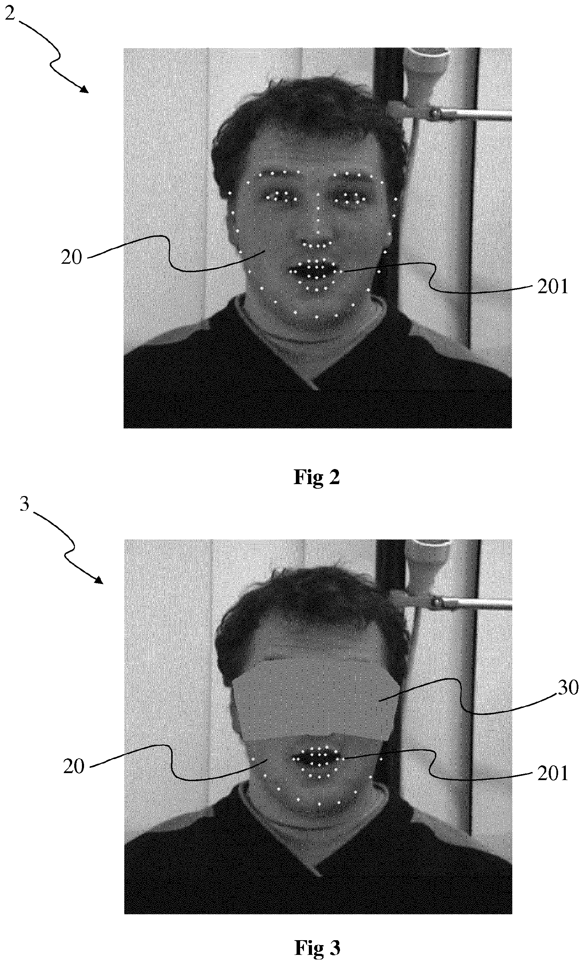

During step 51, second parameters representative of the appearance model are obtained from a training data set comprising a plurality of second images, each representing a second face. The number of second images may be comprised between a dozen and several thousand. The second images each represent the second of a same person or, according to a variant, different second faces (e.g., of different persons) are represented in the second images, i.e. each different second face is represented in a different subset of the plurality of the second images. An example of a second image 2 is illustrated on **figure 2.** Figure 2 shows a second face 20 of a person, each part of the second face being visible, i.e. not occluded by an object. Facial landmarks 201 associated with the second face 20 are illustrated with white spots on the second face 20. The facial landmarks 201 are for example computed automatically using a landmark detection algorithm, such as the one described in "Robust face landmark estimation under occlusion", by X. Burgos-Artizzu, P. Perona and P. Dollar in IEEE International Conference on Computer Vision, Sydney, 2013. The facial landmarks 201 may be set up manually by an operator according to another example. The number and the location of the facial landmarks 201 are determined according to the type of object they are associated with. **Figure 4** shows for example an image 40 comprising 68 landmarks of the second face represented in the second image. An image 40 is advantageously associated with each second image of the set of second images. Each image 40 may be normalized to a common reference scale and orientation. This normalization may for instance be performed using Procrustes analysis, see https://en.wikipedia.org/wiki/Procrustes_analysis. The landmarks 401, 402 to 468 correspond to key points or interesting spots of a face, such as eye corners, nose tips, mouth corners and face contour. Each landmark is advantageously identified with an ID, for example an integer. The IDs in the example of figure 4 are 1, 2, 3 ... 68. The IDs are advantageously the same in each image 40 and refer to the same landmark location. For example the landmarks associated with the mouth have always the IDs 49 to 68, the landmarks associated with the left-hand eye have always the IDs 37 to 42, etc. Coordinates (x,y) are advantageously associated with each landmark corresponding to the position of the landmark in the normalized image 40, which has the size of the second image that it is associated with. In the case of a 3D image, the coordinates of the landmark are (x,y,z). Naturally, the interesting spots are highly dependent on the type of object represented in the second images and are different from an object to another. Naturally, the number of landmarks is not limited to 68 but extends to any number L, L being an integer, for example 50, 138 or 150.

The appearance model (also called generative model) of the second face is obtained from the training data set comprising the plurality of non-occluded second face images 2. The appearance model is for example an AAM (or Active Appearance Model), such as disclosed by T. Cootes, G. Edwards, and C. Taylor in "Active appearance models", Transactions in Pattern Analysis and Machine Intelligence, 23(6):681-685, 2001). As described in the paper titled "Active Appearance Models Revisited", by I. Matthews and S. Baker in the International Journal of Computer Vision, 60(2), pp. 135-164, 2004, the generation of the appearance model outputs two main components:

- a shape model (also called geometry) that captures the variations of the layout of landmark locations around the mean shape of the second face in the second images. The shape model may be represented by the vertex locations of a mesh (of triangles for example) anchored to the facial landmarks, and mathematically defined as the concatenation of the 2D coordinates of the V vertices that make up the mesh. The shape model is represented with a base mesh So and a set of n (for example 7, 10, 20 or more) of vertex displacement $S_i$ that represent linear modes of variation around So. The shape S of each second face in each second image may then be represented with the following equation:

$$S = S_0 + \sum_{i=1}^{n} p_i S_i$$

Where the $p_i$ correspond to the shape parameters and are part of second parameters associated with the appearance model.

- a texture model (also called appearance) that captures the variations of the texture contained in the convex hull of the landmarks in the mean shape, around the mean texture of the second images. The texture is defined from the set of pixel intensity values (grey level or color) within a reference base mesh. This base mesh provides a global reference for face geometry, and is obtained by aligning and normalizing the second face images in the training database to a common scale and orientation (for example a frontal view). When defining the appearance model, raw intensity values may be replaced by representations of textures that are less sensitive to lighting changes, relying, for instance, on gradient orientations. The texture model is represented with a mean texture Ao and a set of N (for example 5, 8, 10, 20 or more) texture variations $A_i$ that represent linear modes of variation around Ao. The texture vector for a given pixel location x in a given second face in a given second image may then be represented with the following equation:

$$A(x) = A_0(x) + \sum_{i=1}^{m} \lambda_i A_i(x)$$

Where $\lambda_i$ corresponds to a set of texture parameters, one set of texture parameters being associated with each second image (or each second face), the texture parameters being part of the second parameters associated with the appearance model.

The shape and appearance basis vectors Si and $A_i$ are learnt from a training set of annotated face images, i.e. the set of second images with associated facial landmarks. All faces in the training set may be first aligned to a common normalized pose (scale and orientation) using a process known as Generalized Procrustes Analysis, as disclosed at *https://en.wikipedia.org/wiki/Procrustes_analysis.* Typically, the mean of the aligned face regions provides the reference base mesh So and texture (appearance) $A_0$. The principal modes of variation of the training samples around $S_0$ and $A_0$ are for example computed using Principal Component Analysis (PCA). This is in essence a dimensionality reduction technique, where one tries to capture as much of the variability of the input data as possible in a lower-dimensional linear subspace of the input space. The PCA subspace is computed so as to maximize the variance of the projections of the input samples onto the subspace, for a given subspace dimension target. PCA is applied independently to the shape (mesh vertices coordinates) and texture (or appearance, e.g. pixel colors or grey levels, or alternative representations of texture) components of the appearance model (e.g. AAM). Optionally, a third PCA is applied to the concatenated set of shape and texture PCA output vectors to further reduce the dimension of the model. The subspaces dimensions at the output of the PCAs may be optionally adjusted so that a fixed percentage (usually 95%) of the variance of the original data is retained after the reduction of dimensionality. Typically, these dimensions are of the order of 25 for both shape and appearance, to be compared with the initial dimensions of around 100 for shape space and 10000 for appearance space.

Calculating the second parameters associated with a given second image is straightforward, as the shape vector S for each second image is known from the landmarks 201. The texture A for the second image is readily obtained by back-warping the texture of the second image to the reference geometry $S_0$, as described for instance in section 4.1.1 of the above mentioned paper "Active Appearance Models revisited". Since the basis vectors $\{S_i\}$ and appearance vectors $\{A_i\}$ computed through a Principal Component Analysis are orthogonal, the second image parameters $\{p_i\}$ (respectively $\{\lambda_i\}$) are then obtained as $p_i = S.S_i/S_i.S_i$ and $\lambda_i = A.A_i/A_i.A_i$.

In a step 52, a second occluded part of the second face is determined for each second image 2, as illustrated of figure 3. **Figure 3** shows an image 3 of the second face 20 illustrated on figure 2, a part 30 (called second occluded part) of the second face 20 being occluded by an object. The second occluded part 30 is determined from the shape of the object and from a location information of the object with regard to the second face 20. The location information corresponds for example to the landmarks that are occluded by the object, depending on the type of the object. In the example of figure 3, the shape of the object used to determine the second occluded part 30 is the shape of the object 112 occluding the first face, i.e. a HMD. Knowing the general shape of such an object and the general location of such an object on a face, it is possible to determine the second occluded part 30 on each second image. To reach that aim, reference landmarks may be used that are the same in each second image, which is possible as the landmarks share the same semantics on each second image, as explained with regard to figure 4. For instance, a 2D representation basis defined by the locations of 3 non-aligned landmarks may be used as a reference in each second image (i.e. with the 3 same landmarks, i.e. landmarks with same IDs) for locating the second occluded part 30. This second occluded part may for example be defined as a polygon whose vertex coordinates are expressed in said 2D representation basis.

The second visible part of the second face 20 in each second image may then be determined from the second occluded part 30. The second visible part may for example correspond to the part of the second face 20 complementary to the second occluded part 30, said second visible part being for example defined from the location information of the landmarks that are determined visible in each second image. According to another example, the second visible part corresponds to a rectangle whose center, width and height are determined as a function of geometrical properties of the occluded part 30.

In a step 53, second attributes associated with each second visible in each second image are calculated. To reach that aim, the second visible part in each second image is subdivided into a determined set of possibly overlapping rectangles (or triangles), and a set of second attributes is computed for each rectangle (or respectively triangle). The second attributes may correspond to any descriptor of the texture within each rectangle (or respectively triangle), e.g. mean color information for each color channel or a histogram of gradient orientations as disclosed by N. Dalal and B. Triggs in "Histograms of Oriented Gradients for Human Detection", in IEEE International Conference on Computer Vision and Pattern Recognition, 2005. According to another example, the second attributes may be calculated for areas of each second image (for example rectangle) of determined size around a selection of or all the visible landmarks.

In a step 54, a regressor (i.e. a regression function) is obtained (i.e. determined or calculated) from the second attributes computed in step 53 and the second parameters $p_i$ and $\lambda_i$ computed in step 51. The regression function of the regressor is learnt from the multiple set of second attributes $f_i$ and the multiple second parameters $p_i$ and $\lambda_i$, a set of second attributes and a set of second parameters $p_i$ and $\lambda_i$ being associated with each second image of the training set of second images. A regression function between multidimensional input data (i.e. a set of second attributes associated with one second image forming one dimension of the input data) and multidimensional output data (i.e. a set of second parameters associated with one second image forming one dimension of the output data) may be learnt by means of a hashing scheme that partitions the input data samples into "bins" such that the variance of the input data fi in each bin is small. The regressor output for each bin is computed from the distribution of input samples that fall into the bin, for instance as the mean values of the output second parameters of these samples. The regression output for a given input is then computed by first finding out which bin the input sample falls into, then looking up the output regression value for the bin, as computed above. Advantageously, the hashing scheme may be made to depend on random data partitioning criteria, and repeated for a large number of realizations from these random criteria. The output regression value for a given input is then averaged over all the output values computed for each random realization of the hashing scheme. Classification techniques well known from the machine learning literature, such as random ferns (as disclosed by Oezuysal et al, "Fast Keypoint Recognition using Random Ferns, IEEE Transactions on Pattern Analysis and Machine Intelligence, Vol. 32 n°3, pp.448-461, 2010) or random forests, may be used to obtain the desired hashing.

**Figure 6** shows a method of generating, e.g. synthesizing, a first face in a first image (also called test image), according to a particular and non-limiting embodiment of the present principles. The synthesizing method is for example implemented in the device 10.

In an optional step 61, a first occluded and a first visible part of the first face are determined in an input image 60, i.e. the first image. The first occluded part corresponds to the part of the first face in the first image that is occluded by an occluding object, for example a HMD, sunglasses, see-through glasses, a blindfold. The first occluded part may be detected by using a visual model of the occluding object, when the type of the occluding object is known (e.g. during a video-conference via HMD), the detection consisting in retrieving an object corresponding to the visual model. The visual model may be for example selected in a list of different visual objects with corresponding description that may be stored in the memory of the device 10 or that may be stored remotely and downloaded via a network such as the Internet. A first visible part of the first face may then be obtained as the part of the first face that is complementary to the first *occluded part. According to a variant, the first visible part of the first face is a geometry (for example a rectangle or a triangle) whose characteristics (e.g. center, length of the edges) are computed from the geometrical properties of the first occluded part. According to a variant, the detection of the first occluded part is based on a facial landmark detection algorithm that is applied to the occluded image. Facial landmark detection algorithms that are robust to occlusion are known from the state of art, one such algorithm is described in the paper "Robust face landmark estimation under occlusion", by X. Burgos-Artizzu, P. Perona and P. Dollar in IEEE International Conference on Computer Vision, Sydney, 2013. According to this variant, the location of the first visible part in the first image is computed or calculated as a function of the detected landmarks on the first image.

In a step 62, first attributes representative of the first visible part are obtained, i.e. either calculated or received from a memory. To reach that aim, the first visible part is for example subdivided into a determined set of possibly overlapping rectangles (or triangles), following the same subdivision process as the one used in step 53, and the set of first attributes defined in step 53 is computed for each rectangle (or respectively triangle). A vector formed by stacking the components of each attribute in set of first attributes (one set for each rectangle for example) is then obtained.

In a step 63, first parameters $\{p_i\}$ and $\{\lambda_i\}$ representative of the first face of the first image are obtained by applying the regressor learnt at step 54 to the vector of first attributes, the output of the regressor being a vector of first parameters $\{p_i\}$ and $\{\lambda_i\}$ describing the first face of the first image 11. According to a variant, the regressor used to obtain the first parameters is retrieved from a library of regressors, which is for example stored locally in the memory of the device 10 or downloaded from a remote storage device such as a server.

In a step 64, the first face is generated based on the first parameters obtained at step 63. Synthesizing the first face corresponds to reconstructing the first face in its entirety, i.e. retrieving the missing texture information that is occluded by the occluding object. To reach that aim, the instance of the appearance model defined by the first parameters is computed. As explained with regard to step 51 of figure 5, this instance provides the texture of the reconstructed face in the reference "shape-free" geometry as well as the locations of the landmarks defining the geometry of the face. The synthesized face appearance is obtained by warping the shape-free texture of the model instance to its geometry. According to a variant, the synthesis comprises retrieving a third image of the first face, which is not occluded, by comparing the obtained first parameters with third parameters representative of one or more third images The third parameters are obtained for each third image by fitting the appearance model computed in step 51 to this image. When, for example, the appearance model is an Active Appearance Model, the fitting process yielding the model parameters for an input un-annotated input image is known from the state-of-art and described, for example, in the above-mentioned paper "Active Appearance Models Revisited". The third image may for example be retrieved from a sample video in which the face to be reconstructed is captured without occlusion. The third image that is retrieved corresponds to the third image having the associated third parameters closest according to some distance metric, for instance the Euclidean distance, to the first parameters. The texture information of the third image may then be used to synthesize the first face, i.e. the texture information of the face in the third image replaces the whole texture information of the first face.

Steps 61 to 64 may be reiterated for several first images, with same or different occluding objects. If the occluding object is different, a new regressor adapted to the current occluding object and used in step 63 may be retrieved.

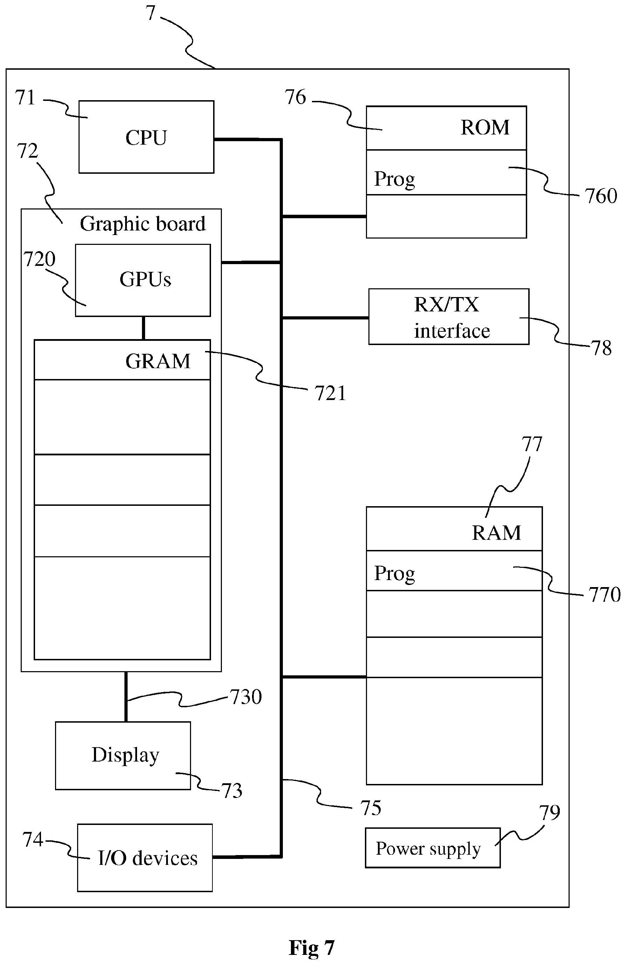

**Figure 7** diagrammatically shows a hardware embodiment of a communication terminal 7 comprising the device 10, for example a smartphone or a tablet or a HMD

The communication terminal comprises the following elements, connected to each other by an address bus 75 of addresses that transports data that also transports a clock signal:

- a microprocessor 71 (or CPU),
- a graphics card 72 comprising:

  • several Graphical Processor Units (or GPUs) 720,
  • a Graphical Random Access Memory (GRAM) 721,

- a non-volatile memory of ROM (Read Only Memory) type 76,
- a Random Access Memory or RAM 77,
- a receiver/transmitter interface 78,
- one or several I/O (Input/Output) devices 74 such as for example a tactile interface, a mouse, a webcam, etc. and
- a power source 79.

The device 7 also comprises one or more display devices 73 of display screen type directly connected to the graphics card 72 to display images calculated live in the graphics card, for example.

The algorithms implementing the steps of the method(s) specific to the present principles and described hereinbefore are stored in the memory GRAM 721 of the graphics card 72 associated with the terminal 7 implementing these steps.

According to another variant, the terminal 7 does not comprise any Graphic board 82, every computation being performed in the CPU 71 using the RAM 77.

According to another variant, the terminal 7 comprises only one storage device as a memory.

Naturally, the present disclosure is not limited to the embodiments previously described.

In particular, the present disclosure is not limited to a method of synthesizing the image of a face but also extends to a method of (and device configured for) reconstructing the image of a face that is at least partially occluded.

The present disclosure is not limited to the synthesizing of image(s) of a face but also extends to the synthesizing of image(s) of any object or animal having at least a part that is occluded by another object.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of generating a first face (111) in a first image (11), a first occluded part of said first face being occluded by an occluding object (112) in said first image (11), the method comprising:

   - obtaining (62) first attributes representative of a first visible part of said first face (111);
   - obtaining (63) first parameters representative of an appearance of said first face by applying a regressor to said first attributes, said regressor modelling a correlation between second attributes representative of second visible parts of a plurality of second faces (20) in second images (2) and second parameters representative of an appearance model of said plurality of second faces (20);
- generating (64) said first face from said first parameters.

2. The method according to claim 1, wherein each second face (20) is represented non-occluded in one corresponding second image of said second images (2), a set of determined landmarks (201) being associated with each second face (20) in the corresponding second image, said appearance model and said second parameters representative of the appearance model being obtained by a statistical analysis of landmark location information associated with said determined landmarks (201) and of texture information associated with an area delimited by a convex hull of said determined landmarks (201) in the second images (2).

3. The method according to claim 2, further comprising obtaining said regressor, by:

- determining a second occluded part (30) of each second face (20) of at least a part of said plurality of second faces from a shape information associated with said occluding object (112);
- determining said second visible parts from said second occluded parts (30);
- calculating said second attributes from said second visible parts; and
- obtaining said regressor from said second attributes and said second parameters.

4. The method according to one of claims 1 to 3, wherein said appearance model is an Active Appearance Model.

5. The method according to one of claims 1 to 4, wherein said occluding object (112) is a Head-Mounted Display.

6. The method according to one of claims 1 to 5, wherein the generating comprises retrieving a third image of the first face having third parameters closest to said first parameters, said first face comprising no occluded part in said third image.

7. The method according to one of claims 1 to 6, further comprising determining (61) said first visible part of said first face (111) in said first image (11) from said first occluded part.

8. A device (10) for generating a first face in a first image, a first occluded part of said first face being occluded by an occluding object (112) in said first image (11), the device comprising at least one processor (101) configured to:

- obtain first attributes representative of a first visible part of said first face (11);
- obtain first parameters representative of an appearance of said first face by applying a regressor to said first attributes, said regressor modelling a correlation between second attributes representative of second visible parts of a plurality of second faces in second images and second parameters representative of an appearance model of said plurality of second faces;
- generate said first face from said first parameters.

9. The device according to claim 8, wherein each second face is represented non-occluded in one corresponding second image of said second images, a set of determined landmarks being associated with each second face in the corresponding second image, said at least one processor being configured to obtain said appearance model and said second parameters representative of the appearance model by a statistical analysis of landmark location information associated with said determined landmarks and of texture information associated with an area delimited by a convex hull of said determined landmarks in the second images.

10. The device according to claim 9, wherein the at least one processor (101) is further configured to obtain said regressor, by performing or enabling:

- determining a second occluded part of each second face of at least a part of said plurality of second faces from a shape information associated with said occluding object;
- determining said second visible parts from said second occluded parts;
- determining said second attributes from said second visible parts; and
- obtaining said regressor from said second attributes and said second parameters.

11. The device according to one of claims 8 to 10, wherein said appearance model is an Active Appearance Model.

12. The device according to one of claims 8 to 11, wherein said occluding object is a Head-Mounted Display.

13. The device according to one of claims 8 to 12, wherein the at least one processor (101) is configured to retrieve a third image of the first face having third parameters closest to said first parameters, said first face comprising no occluded part in said third image.

14. The device according to one of claims 8 to 13, wherein the at least one processor is further configured to determine said first visible part of said first face (111) in said first image (11) from said first occluded part.

**15.** A non-transitory processor readable medium having stored therein instructions for causing a processor to perform at least a step of the method according to one of claims 1 to 7.

**Fig 4**

**Fig 1**

**Fig 2**

**Fig 3**

50 —

Init

Obtaining second parameters of an
appearance model

51

Determining second occluded parts and
second visible parts of second faces

52

Obtaining second attributes of the
second visible parts

53

Obtaining a regressor

54

**Fig 5**

60 — Input

Determining first occluded and first visible parts of a first face
61

Obtaining first attributes of the first visible part
62

Obtaining first parameters of appearance of the first face
63

Generating the first face
64

**Fig 6**

**Fig 7**

Europäisches
Patentamt

European
Patent Office

Office européen
des brevets

# EUROPEAN SEARCH REPORT

Application Number

EP 16 20 4815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BURGOS-ARTIZZU XAVIER P ET AL: "Pose and Expression-Coherent Face Recovery in the Wild", 2015 IEEE INTERNATIONAL CONFERENCE ON COMPUTER VISION WORKSHOP (ICCVW), IEEE, 7 December 2015 (2015-12-07), pages 877-885, XP032865047, DOI: 10.1109/ICCVW.2015.117 [retrieved on 2016-02-11] * the whole document * | 1-15 | INV. G06K9/00 G06K9/62 |
| X | XAVIER P BURGOS-ARTIZZU ET AL: "Real-time expression-sensitive HMD face reconstruction", 20151102; 20151102 - 20151106, 2 November 2015 (2015-11-02), pages 1-4, XP058077404, DOI: 10.1145/2820903.2820910 ISBN: 978-1-4503-3930-8 * the whole document * | 1-15 | |

| TECHNICAL FIELDS SEARCHED (IPC) |
|---|
| G06K |

The present search report has been drawn up for all claims

| Place of search | Date of completion of the search | Examiner |
|---|---|---|
| The Hague | 11 April 2017 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. BURGOS-ARTIZZU ; P. PERONA ; P. DOLLAR.** Robust face landmark estimation under occlusion. *IEEE International Conference on Computer Vision,* 2013
- *The landmarks,* vol. 401, 402-468, https://en.wikipedia.org/wiki/Procrustes_analysis
- **T. COOTES ; G. EDWARDS ; C. TAYLOR.** Active appearance models. *Transactions in Pattern Analysis and Machine Intelligence,* 2001, vol. 23 (6), 681-685
- **I. MATTHEWS ; S. BAKER.** Active Appearance Models Revisited. *International Journal of Computer Vision,* 2004, vol. 60 (2), 135-164
- **N. DALAL ; B. TRIGGS.** Histograms of Oriented Gradients for Human Detection. *IEEE International Conference on Computer Vision and Pattern Recognition,* 2005
- **OEZUYSAL et al.** Fast Keypoint Recognition using Random Ferns. *IEEE Transactions on Pattern Analysis and Machine Intelligence,* 2010, vol. 32 (3), 448-461